# EUROPÄISCHE PATENTANMELDUNG

(11) **EP 1 719 954 A1**
(43) Veröffentlichungstag der Anmeldung: **08.11.2006**
(21) Anmeldenummer: 06009119.6
(22) Anmeldetag: 03.05.2006
(51) Int. Cl.: F24D 3/14

(54) **Polymere Befestigungsschiene für die Aufnahme von Fluid führenden Leitungen**

(30) Priorität: 06.05.2005 DE 102005021047
(71) Anmelder: REHAU AG + Co, 95111 Rehau (DE)
(72) Erfinder: Neumann, Guido, 39110 Magdeburg (DE); Voll, Rainer, 96117 Merkendorf (DE)

(57) **Zusammenfassung**

Die Erfindung betrifft eine polymere Befestigungsschiene für die Aufnahme von Fluid führenden Leitungen und deren Verwendung.

## Beschreibung

Die Erfindung betrifft eine polymere Befestigungsschiene für die Aufnahme von Fluid führenden Leitungen und die Verwendung.

Aus dem Stand der Technik sind Befestigungsschienen für Fluid führende Leitungen sowie die Anordnungen für die Verlegung dieser Befestigungsschienen bekannt. Zur Verlegung von Rohren einer Fußbodenheizung werden in bekannter Weise zum Beispiel Flachschienen eingesetzt. Diese Flachschienen werden häufig bauseitig auf vorhandene Dämm- oder Sperrschichtplatten aufgeklebt. Auf die Flachschienen gemäß der örtlichen Gegebenheiten werden danach Heizrohre an Befestigungselementen, die auf der Flachschiene angeordnet sind, ortsfest gehaltert. Da diese Verlegung der Heizrohre manuell auf einer Baustelle erfolgt, ist ein erheblicher Kraftaufwand aufzuwenden.

Aus dem Stand der Technik sind weiterführende Lösungsansätze bekannt. So beschreibt beispielsweise die DE 91 03 626 U1 und DE 9202728 U1 eine Haltevorrichtung zum Halten von Heizrohren für Flächenheizungen, in der sich gegenüberliegende Aussparungen vorgesehen sind, die kreuzweise angeordnete Wege für einzulegende Heizrohre aufweisen. Hierbei wird vorteilhaft die universelle Verlegemöglichkeit der Heizrohre angegeben, die den örtlichen Verlegebedingungen an beispielsweise der Baustelle Rechnung trägt. Zur Halterung der Rohre in der Vorrichtung werden Pylone in der DE 91 03 626 U1 beschrieben, die nach oben weisende Klammern aufweisen, so dass ein Heizungsrohr vorteilhaft eingedrückt werden kann. Die Pylone sind bei dieser Ausführung kleiner als der Durchmesser des eingelegten Heizrohres.
Mittels mehrerer dieser Befestigungsschienen können auch Flächenheizungen, d.h. Heizrohrregister für beispielsweise die Fußbodenheizung verlegt werden.

Die DE 4340312 A1 beschreibt eine Vorrichtung zur Halterung von Rohren, wobei Stegelemente als Stegkörper verwendet werden, die insbesondere eine Querverlegung von Heizrohren ermöglichen. Aus der CH 664 429 ist hierzu eine Vorrichtung zur Halterung bereits vorbekannt.

Als weiterer Stand der Technik wird die DE 19757489 A1 gesehen, die eine Flachschienenclipsanordnung zur Befestigung von Fußbodenheizungen auf einer Flachschiene beschreibt. Die hierzu vorgesehenen Clipsformen sind variabel an unterschiedlichen Positionen einer Befestigungsschiene einsteck- und einsetzbar.

Nachteilig an diesen bekannten Lösungen ist, dass die Verlegung und der notwendige Kraftaufwand zur Befestigung der Rohre durch die Halteelemente im Wesentlichen vorbestimmt ist, es aber vielfältige Einbausituationen auf Baustellen gibt, die eine flexible Verlegung der Rohre erfordern.

Aufgabe der Erfindung ist es daher, eine polymere Befestigungsschiene für die Aufnahme von Fluid führenden Leitungen anzugeben, die diesen aus dem Stand der Technik bekannten Nachteil überwindet sowie deren Verwendung verbessert.

Erfindungsgemäß wird diese Aufgabe durch die Kombination der Merkmale gemäß Anspruch 1 gelöst und hinsichtlich deren Verwendung durch Anspruch 7.

Dabei wurde erkannt, dass entlang einer Oberfläche der polymeren Befestigungsschiene eine Vielzahl von Gruppierungen von polymeren Clips-/Noppenhalteelemente angeordnet werden und der Abstand der polymeren Clips-/Noppenhalteelemente innerhalb einer Gruppierung entlang einer Verbindungslinie äquidistant sind, wobei mindestens vier polymere Clips-/Noppenhalteelemente eine Gruppierung bilden und die polymeren Clips-/Noppenhalteelemente jeweils eine Hinterschneidung zur befestigenden Aufnahme einer Fluid führenden Leitung aufweisen und wobei die Clips-/Noppenhalteelemente eine herzförmige und/oder eine zylinderförmige und/oder eine ellipsoidförmige und/oder eine hexagonförmige und/oder eine bogenförmige Form aufweisen.

Die Shorehärte für ein Clips-/Noppenhalteelement liegt erfindungsgemäß im Bereich zwischen Shore 50 bis Shore 70, wobei das Clips-/Noppenhalteelement aus einem thermoplastischen Polymer aus der Gruppe Polypropylencopolymer (PPC) von Polypropylen besteht; die polymere Befestigungsschiene selbst eine Shorehärte im Bereich zwischen Shore 50 bis Shore 70 aufweist und aus einem Material aus der Gruppe Polypropylencopolymer (PPC) von Polypropylen besteht.
In einer weiteren Ausgestaltung der Erfindung gemäß Anspruch 2 wurde erkannt, dass die Clips-/Noppenhalteelemente innerhalb der Gruppierung auf deren jeweiligen das Rohr aufnehmenden Oberflächen mit einer Mikrostruktur so versehen sind, dass der Oberflächenreibungswiderstand reduziert wird.
Denkbar in diesem Erfindungszusammenhang sind beispielsweise - aber nicht einschränkend - schuppenförmige Mikrostrukturen oder haifischhautförmige Oberflächenstrukturen. Damit wird erreicht, dass das zu befestigende Rohr kräfteschonend und damit montagefreundlich in die Clipselemente einführbar ist.

Die Materialwahl der Clips-/Noppenhalteelemente im Zusammenhang mit einer den Oberflächenreibungswiderstand reduzierenden Oberflächenmikrostukturierung oder Oberflächentexturierung schafft mit die Vorraussetzung dafür, dass eine für das Montagepersonal kräfteschonende Verlegung erfolgen kann, ohne dass die wirksam notwendige Haltewirkung der damit verlegten Heizungsrohre verloren geht.
Gerade beim Verlegen und Befestigen von mehrere Hundert Quadratmetern umfassenden Fußbodenheizungsgewerken zeigt sich dadurch der Vorteil der Erfindung.

Die Verwendung mehrerer polymerer Befestigungsschienen der erfindungsgemäßen Art erlaubt den Zusammenbau zu einem Rohrleitungsmodul, auch Modul genannt. Dieses flächenförmige Modul kann auch als Betonkerntemperierungsmodul und als Bo-den-, Wand- und Deckenheiz- und -kühlmodul zum Einsatz kommen, wobei neben Fußbodenheizungen auch Decken- und Wandheizungen oder Zwischenwandheizungen mit der erfindungsgemäßen Befestigungsschiene nach Anspruch 1 ausgeführt werden können.

Gerade die Verbindungsmittel/-aufnahmen gestatten die variable Fixierung weitgehend unabhängig von der Geometrie des Raums oder der Raumanordnung durch seitlich im Abstand d an der Befestigungsschiene befindliche Steck- und/oder Rastverbindungen.

Vorteilhaft wird hierdurch ein zeitsparender Grundaufbau im Sinne eines Rohrregistermoduls geschaffen, wobei durch die erfindungsgemäßen Clips-/Noppenhalteelemente sich ein kräfteschonendes Verlegen der Rohre in das Rohrregister/-modul ergibt.

Ein Ausführungsbeispiel der Erfindung ist in den Zeichnungen dargestellt und wird im Folgenden näher beschrieben.

Es zeigen:
- Figur 1:: eine polymere Befestigungsschiene in Draufsicht mit Gruppen von Clips-/Noppenhalteelemente, vorzugsweise in einer Viereranordnung, mit unterschiedlichen Clips-/Noppenhalteelementen;
- Figur 2:: eine Steck- und Rastverbindung der polymeren Befestigungsschiene;
- Figur 3:: Anordnung mehrerer Befestigungsschienen zu einem Modul.

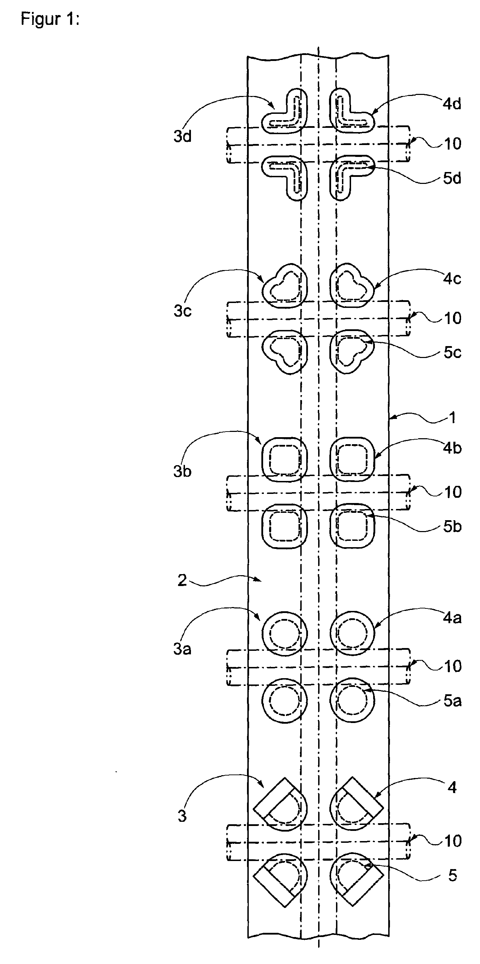

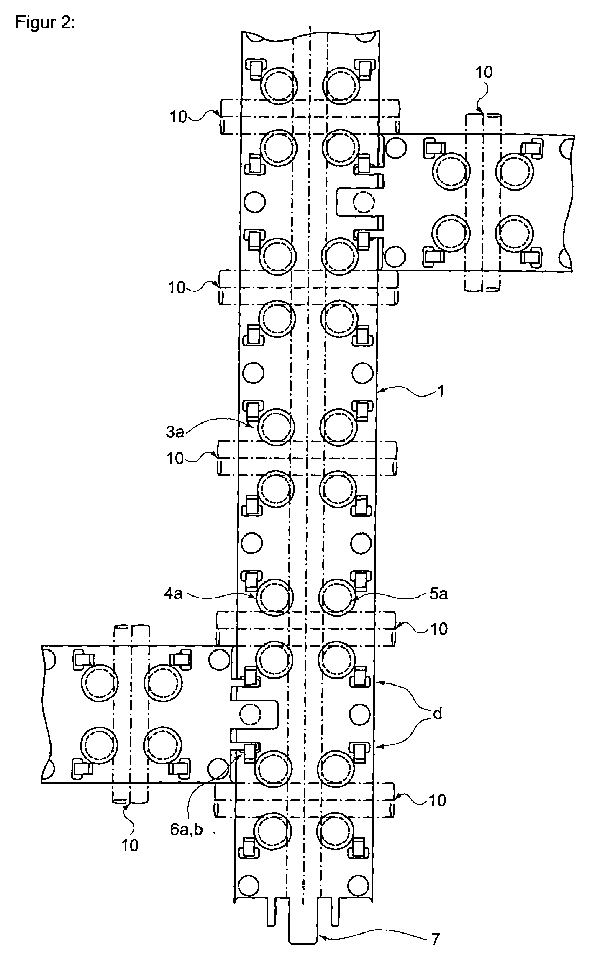

In Figur 1 ist die erfindungsgemäße Befestigungsschiene (1) in Draufsicht dargestellt. Dabei sind Gruppen (3,3a,3b,3c,3d) unterschiedlicher Befestigungsclips-/- Noppenhalteelementeformen (4,4a,4b,4c,4d) entlang der Schiene (1) - vorzugsweise Gruppen mit mindestens vier Clips-/Noppenhalteelementen (4,4a,4b,4c,4d) - vorgesehen. Seitlich an der erfindungsgemäßen Befestigungsschiene (1) sind im Abstand d zueinander Verbindungsaufnahmen und/oder Verbindungsmittel (6a, 6b) in Form von Rast- und/oder Steckverbindungen (7) angeordnet (siehe Figur 2), die zum Verbinden von weiteren Befestigungsschienen (1) verwendet werden, wobei sich eine flächenförmige Modulbauweise (11) angepasst an die jeweilige Verbausituation ergibt. Die Clips-/Noppenhalteelemente (4,4a,4b,4c,4d) selbst sind aus den in Anspruch 1 genannten Materialien ausgeführt; Gleiches gilt für die Materialausführung der Befestigungsschiene (1).

Nicht weiter in den Figuren 1 bis 3 dargestellt sind die erfindungsgemäßen Mikrostrukturen gemäß Anspruch 2 und 3 zum verbesserten und kraftsparenden Verlegen der Rohre (10), insbesondere Heizrohre, wobei die Mikrostruktur den Gleitwiderstand der Clips-/Noppenhalteelementoberflächen (4, 4a, 4b, 4c, 4d) so reduziert, dass die Rohre (10) gehaltert befestigt sind.

Die polymeren Clips-/Noppenhalteelemente (4, 4a, 4b, 4c, 4d) weisen zudem jeweils Hinterschneidungen (5, 5a, 5b, 5c, 5d) auf, wobei herzförmige und/oder zylinderförmige und/oder ellipsoidförmige und/oder mehreckförmige und/oder bogenförmige Formen in mindestens einer Vierergruppierung (3, 3a, 3b, 3c, 3d) verwendet werden. Die erfindungsgemäß gewählten Formen der Clips-/Noppenhalteelemente (4, 4a, 4b, 4c,4d) sind dabei auch in einer alternierenden Anordnung auf der Befestigungsschiene (1) angeordnet denkbar. D.h. beispielsweise, dass sich bogenförmige und zylinderförmige Clips-/Noppenhalteelementegruppierungen (3a,3d) zu jeweils mindestens vier Clips-/Noppenhalteelemente (4a, 4d) entlang der Befestigungsschiene (1) äquidistant abwechseln.
Dies kann insbesondere in den Endbereichsabschnitten eines als Modul (11) verbundenen Rohrregisters von Vorteil sein, da hier die Biegung des zu befestigenden Rohrs (10) - je nach dessen Steifigkeit - eine andere Clips-/Noppenhalteelementbefestigung (4, 4a, 4b, 4c, 4d) wünschenswert/erforderlich macht, so dass das im Bereich des Rohrbogens wirkende Rückstellvermögen des dort gebogenen Rohrs (10) durch beispielsweise eine bogenförmig gewählte Clips-/Noppenhalteelementgruppierung (3d, 4d, 5d) verbessert gehaltert wird.
Damit wird erfindungsgemäß eine Montagesituation geschaffen, die es erlaubt, auch Rohre (10) mit hoher oder unterschiedlicher Steifigkeit im Sinne eines damit geschaffenen Rohrmodulregisters (11) zu verlegen.
Durch diese Maßnahme wird auch erreicht, dass die Arbeitszeit auf der Baustelle reduziert wird.
Die Figur 2 zeigt auch eine Steck- und Rastverbindungsanordnung (7) der polymeren Befestigungsschiene (1) als Verbindungsaufnahme und/oder Verbindungsmittel (6a, 6b), die seitlich an der Befestigungsschiene (1) in Abständen von beispielsweise 5 cm zueinander, aber nicht einschränkend zu sehen, angeordnet sind.

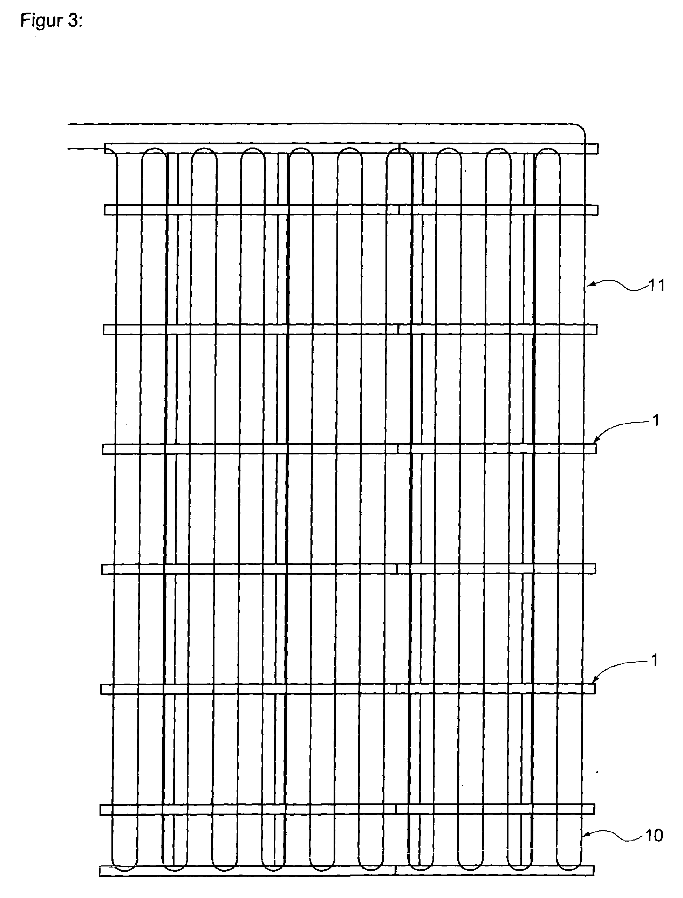

Figur 3 zeigt eine montagefertige Anordnung mehrerer Befestigungsschienen (1) zu einem Rohrregistermodul (11) für die Aufnahme der daran zu befestigenden Rohre (10) mit den entsprechenden Clips-/Noppenhalteelementgruppierung (4,4a,4b,4c,4d), die nicht weiter dargestellt sind.
Die seitlich angeordneten Verbindungsaufnahmen und/oder Verbindungsmittel (6a,6b) der jeweiligen Befestigungsschiene (1) schaffen somit ein Modul (11), das als Betonkerntemperierungsmodul oder als Boden- Wand- und Deckenheizmodui oder-Kühimodul verwendet werden kann.

Solche Module (11) werden erfindungsgemäß nicht nur für Fußbodenheizungszwecke verwendet, sondern eignen sich auch als Flächenmodul in oder an Wänden und/oder Böden und/oder Decken.
Gerade auch für den Fertighausbau sind derart gestaltete Module (11) mit den erfindungsgemäßen Befestigungsschienen (1) von Vorteil.

## Patentansprüche

1. Polymere Befestigungsschiene (1) für die Aufnahme von Fluid führenden Leitungen (10), **gekennzeichnet durch** die Kombination folgender Merkmale:
-a- das entlang einer Oberfläche (2) der polymeren Befestigungsschiene (1) eine Vielzahl von Gruppierungen (3, 3a, 3b, 3c, 3d) von polymeren Clips-/Noppenhalteelementen (4, 4a, 4b, 4c, 4d) angeordnet sind und
-b- der Abstand der polymeren Clips-/Noppenhalteelemente (4, 4a, 4b, 4c, 4d) innerhalb einer Gruppierung entlang einer Verbindungslinie äquidistant sind, wobei
-c- mindestens vier polymere Clips-/Noppenhalteelemente (4, 4a, 4b, 4c, 4d) eine Gruppierung bilden und
-d- die polymeren Clips-/Noppenhalteelemente (4, 4a, 4b, 4c, 4d) jeweils eine Hinterschneidung (5, 5a, 5b, 5c, 5d) zur befestigenden Aufnahme einer Fluid führenden Leitung (10) aufweisen, wobei
-e- die Clips-/Noppenhalteelemente (4, 4a, 4b, 4c, 4d) eine herzförmige und/oder eine zylinderförmige und/oder eine ellipsoidförmige und/oder eine mehreckförmige und/oder eine bogenförmige Form aufweisen und
-f- die Shorehärte für ein Clips-/Noppenhalteelement (4, 4a, 4b, 4c, 4d) im Bereich zwischen Shore 50 bis Shore 70 liegt, wobei
-g- das Clips-/Noppenhalteelemente (4, 4a, 4b, 4c, 4d) aus einem thermoplastischen Polymer aus der Gruppe PPC oder PP besteht und
-h- die polymere Befestigungsschiene (1) eine Shorehärte im Bereich zwischen Shore 50 bis Shore 70 aufweist und
-i- die Befestigungsschiene (1) aus einem Material der Gruppe PP oder PPC besteht.

2. Polymere Befestigungsschiene (1) für die Aufnahme von Fluid führenden Leitungen (10) nach Anspruch 1, **dadurch gekennzeichnet, dass** die Oberfläche der Clips-/Noppenhalteelemente (4, 4a, 4b, 4c, 4d) innerhalb einer Gruppierung mit einer Mikrostruktur versehen sind.

3. Polymere Befestigungsschiene (1) für die Aufnahme von Fluid führenden Leitungen (10) nach Anspruch 2, **dadurch gekennzeichnet, dass** die Mikrostruktur den Gleitwiderstand auf Werte im Bereich zwischen 0,05 bis 0,15 reduziert.

4. Polymere Befestigungsschiene (1) für die Aufnahme von Fluid führenden Leitungen (10) nach einem der vorgehenden Ansprüche, **dadurch gekennzeichnet, dass** seitlich in einem Abstand d entlang der polymeren Befestigungsschiene (1) Verbindungsaufnahmen (6a) und/oder Verbindungsmittel (6b) angeordnet sind.

5. Polymere Befestigungsschiene (1) für die Aufnahme von Fluid führenden Leitungen (10) nach Anspruch 4, **dadurch gekennzeichnet, dass** die Verbindungsaufnahmen (6a) und/oder Verbindungsmittel (6b) zur Fixierung weiterer polymerer Befestigungsschienen (1) verwendet werden und aus einer Steck- und/oder Rastverbindung (7) bestehen.

6. Polymere Befestigungsschiene (1) für die Aufnahme von Fluid führenden Leitungen (10) nach Anspruch 5, **dadurch gekennzeichnet, dass** die Abstände der einzelnen Steck- und/oder Rastverbindungen (7) zwischen 5 cm liegt.

7. Verwendung mehrerer polymerer Befestigungsschienen (1) nach einem der Ansprüche 1 bis 6, **dadurch gekennzeichnet, dass** ein flächenförmiges, die Fluid führenden Leitungen (10) befestigendes Modul (11) gebildet wird.

8. Verwendung mehrerer polymerer Befestigungsschienen (1) nach Anspruch 7, **dadurch gekennzeichnet, dass** das flächenförmige Modul (11) ein Betonkerntemperierungsmodul ist.

9. Verwendung mehrerer polymerer Befestigungsschienen (1) nach Anspruch 7, **dadurch gekennzeichnet, dass** das Modul (11) als Flächenheizungs- oder -kühlmodul in und/oder an Wänden, Böden und Decken verbaubar ist.

10. Verwendung mehrerer polymerer Befestigungsschienen (1) nach einem der Ansprüche 7 bis 9, **dadurch gekennzeichnet, dass** abgeteilte Raumgruppen in einem Gebäude mit dem Modul (11) bestehend aus mehreren Befestigungsschienen (1) gemäß Anspruch 1 versehen sind.
